# EUROPEAN PATENT SPECIFICATION

(11) **EP 1 587 334 B1**
(45) Date of publication and mention of the grant of the patent: **07.02.2007**
(21) Application number: 04101571.0
(22) Date of filing: 16.04.2004
(51) Int. Cl.: H04Q 7/32, H04M 1/725

(54) **Portable Alerter for Wireless Device**
Tragbarer Benachrichtiger für drahtloses Gerät
Dispositif d'alerte portatif pour un dispositif sans fil

(43) Date of publication of application: 19.10.2005
(73) Proprietor: Research In Motion Limited, Waterloo, Ontario N2L 3W8 (CA)
(72) Inventor: Ladouceur, Norman, Waterloo, Ontario N2T 1A2 (CA); Griffin, Jason, Waterloo, Ontario N2T 2J5 (CA)
(74) Representative: Rickard, David John

(56) References cited:
- WO-A-00/33468
- US-A- 5 878 354
- US-A- 5 924 044
- US-A1- 2001 012 761
- US-A1- 2002 115 478

## Description

The present invention relates generally to the field of wireless communication and wireless communication devices.

The invention has particular applicability to the field of portable wireless communication devices and personal notification. Examples of portable wireless communication devices (herein referred to as host device) include pagers, cellular phones cellular smart-phones, wireless organizers, and/or wirelessly enabled notebook computers.

Personal notification refers to a means of alerting the recipient of an incoming alert consisting of any form of audio, visual or touch notification. Examples of personal notification include a phone call, voice message, email, SMS message, instant message, alarm or a calendar alert.

A wireless alerter is an electronic notification device that informs the user of incoming alerts using sensory alerts. The alerts may be visual (text, light), sound (beep or tone) or touch (vibrate). The alerter is also small and portable and can be worn or carried on the human body.

There is a need for a method to un-obtrusively alert users of incoming alerts. Under certain circumstances, users may not wish to carry their host device or be disturbed by alens, but want to be informed of the incoming alerts. Examples of these circumstances include formal parties, important meetings, or factors of convenience and comfort for females carrying their host device in a purse or handbag.

[0005a] US2002/0115478 and W00033468 each disclose a portable host device capable of communicating with a portable alert device to warn a user of an in-coming call. In the case of US2002/0115478, the portable alert device in one embodiment comprises a watch-shaped device. Neither of these references discloses the possibility of the portable alert device being removably connected to the host device and thus each of the host device and portable alert device comprise separate in-coming call alert circuitry.

**[0005b]** US5924044 discloses a modular communication device in which a first, small sized modular unit comprising the major communications circuitry of the communications device can be removed from a larger, second modular unit and used separately therefrom for sending and receiving calls. The first modular unit operates independently of the second unit such that the second unit is disabled when the first unit is not connected thereto.

### GENERAL

[0005c] In a first aspect, the present invention provides a mobile alerter for a host mobile communications device, said mobile alerter comprising: a processor; a power supply; notification hardware; and a wireless receiver for communicating over a wireless interface with the mobile device to receive a notification message from said mobile device to trigger the notification hardware to issue a notification alert to a user, the mobile alerter thereby forming a notification unit of said mobile device when in an un-tethered mode of operation; characterised in that the mobile alerter has a connection interface for removably connecting it to said mobile device, said mobile alerter being arranged to receive a notification message from the mobile device over said connection interface when connected thereto for triggering the notification hardware, the mobile alerter thereby forming a notification unit of said mobile device when in a tethered mode of operation. Thus, the mobile alerter provides notification functionality for the host device in both tethered and untethered modes.

**[0005d]** In other aspects, the present invention provides a mobile communications device including the alerter in accordance with the foregoing aspect of the invention and a method of issuing an alert of an in-coming call/message to a user of such a mobile communications device using the alerter of said device.

The invention permits users to be informed of notifications from their host device without physically carrying or wearing the host device.

The alerter may comprise a remove-able plug-in device which can be mounted to the host device. The alerter utilizes short-range wireless communication protocols (e.g., Bluetooth™ or ZigBee) to communicate with the host device to receive incoming alerts from the host device.

By separating the alert notification from the host device, the user may attend to the alert without carrying the host device. The portable alerter may be hidden from public view or worn inconspicuously. This is beneficial to users who carry their host device in their purse, handbag or briefcase; the alerter allows them to keep their host device hidden and provides them better control on managing alerts.

Other aspects and features of the present application will become apparent to those ordinarily skilled in the art upon review of the following description of specific embodiments of the present invention in conjunction with the accompanying figures.

### BRIEF DESCRIPTION OF THE DRAWINGS

Embodiments of the present application will now be described, by way of example only, with reference to the attached figures, wherein:
FIG. 1 is a block diagram illustrating a portable wireless alerter;
FIG. 2 s a block diagram illustrating the external surface of a host mobile communication device with a cavity to accommodate a portable alerter;
FIG. 3 is block diagram illustrating the connection of a host device with a portable alerter:
FIG. 4 is a block diagram illustrating the communication means between the portable alerter, host device and wireless network;
FIG. 5 is a block diagram illustrating the internal components of the portable alerter;
FIG. 6 is a block diagram illustrating subsystems of interest in a mobile communication device; and
FIG. 7 is a flow chart illustrating a process of receiving notification on the mobile alerter.

Like reference numerals are used throughout the figures to denote similar elements and features.

### DESCRIPTION OF PREFERRED EMBODIMENTS

The present invention provides a method to receive un-obtrusive alerts from the host device through a portable alerter attachment. The alerter attachment may operate as a removable plug-in to the host device (i.e., referred to as un-tethered mode) or may operate connected to the host device (i.e., referred to as tethered mode).

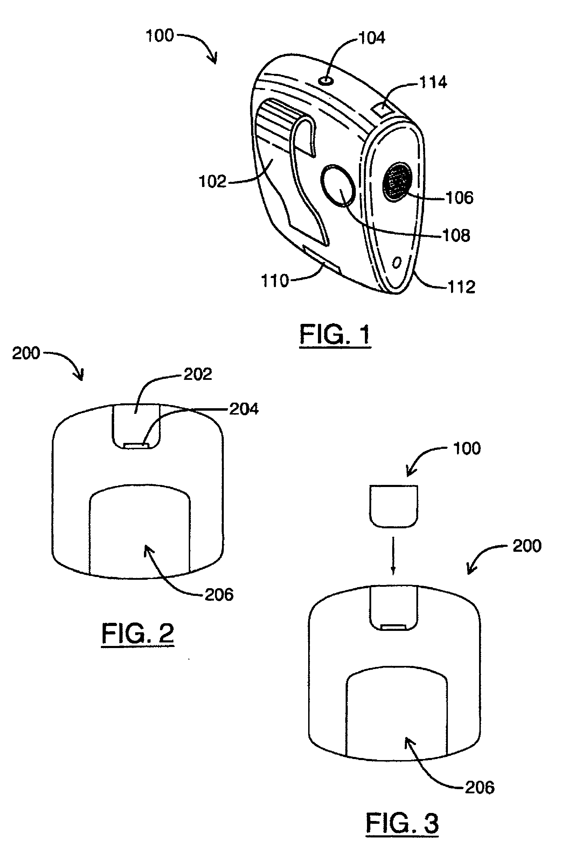

FIG. 1 is a block diagram illustrating one embodiment of a portable wireless alerter. The wireless alerter 100 is a small, pager-sized device. The wireless alerter 100 includes a clip or fastener 102 to attach the device to the human body for easy carry, a battery 108 acting as a power supply, a connection interface 110, a wireless receiver 114 and a form of notification hardware.

The notification hardware may consist of at least one form of notification output including a light 104 to visually notify users of incoming alerts, a speaker 106 to output audio notification and / or a vibrator 112 that outputs touch notification. The current embodiment of the wireless alerter 100 consists of all three forms of notification hardware.

The light 104 may be a light emitting diode (LED) or another form of electronic light that provides visual notification. The connection interface 110 connects the alerter 100 to a mating connector on a host device. The wireless receiver 114 enables the wireless alerter 100 to receive incoming wireless notifications from the host device. The wireless receiver 114 may be an infrared receiver, a Bluetooth^{™} receiver, a RFID receiver, an 802.11 WiFi receiver or any other form of wireless short-range communication receiver.

The alerter 100 preferably has a teardrop shaped cross sectional design, but may alternatively have an oval, rectangular, or other cross sectional shape. The teardrop shape enables a sleeker and more stylish design that also provides a seamless connection with the host device. Other shapes that meet these criteria will also suffice.

The placement of the speaker 106 is located proximally at the centre of the teardrop-shaped side surface, but alternatively may be disposed at the edge of the side surface. Furthermore, the light 104, battery 108 and speaker 106 may be located proximally to different areas and / or surfaces of alerter 100.

FIG. 2 is a block diagram illustrating the external surface of a host mobile communication device with a cavity to accommodate a portable alerter. The external surface of the host mobile communication device (or host device) 200 consists of a battery component 206, and a device cavity 202 where the wireless alerter 100 will slide in. The battery component 206 houses the device power source. In a preferred embodiment, the cavity 202 and battery component 206 are located on the back surface of the host device 200.

On one surface of the cavity 202, preferably the bottom surface, there is a host connection interface 204 that forms a mating connection with the alerter connection interface 110. The connection interface for the alerter 110 and the host device 204 may be a serial, parallel, USB. Firewire (IEEE 1394), wireless (e.g., Bluetooth^{™}) or another form of mating connection.

The material of the body of the alerter 100 and host device 200 is preferably plastic, but may be of any suitably strong and resilient material.

FIG. 3 is a block diagram illustrating the connection of a host device with a portable alerter. When the wireless alerter 100 is in an un-tethered mode, the alerter 100 will be removed from the device cavity 202. The user will only carry the alerter 100 to be informed of incoming notifications.

In the present embodiment, when the alerter 100 is in tethered mode, it will slide into the host device cavity 202 and form a mating connection between the connection interfaces (110 and 204). The user will receive incoming notification on the host device 200 through the tethered wireless alerter.

Other embodiments of this invention may have a wireless connection interface (e.g., Bluetooth^{™}). In this embodiment, a mating connection still exists, but the connection is used to charge the alerter's battery or used to house the alerter on the host device.

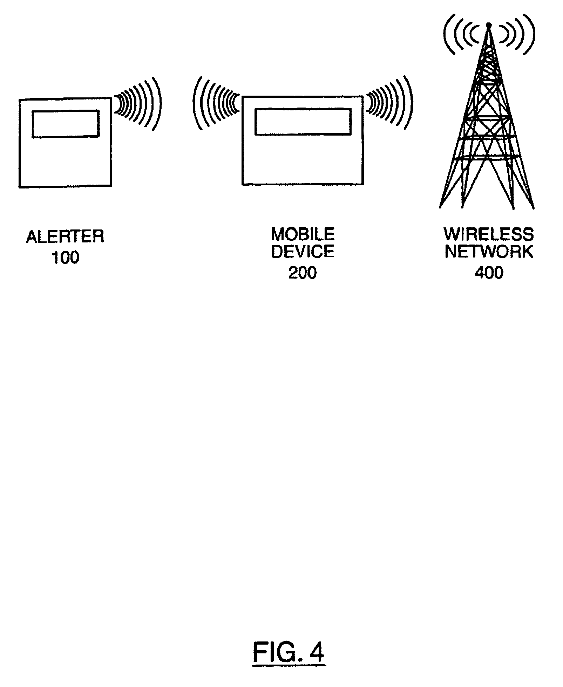

FIG. 4 is a block diagram illustrating the communication means between the portable alerter, host device and wireless network. The wireless network 400 sends a notification message to the host mobile device 200. The host device 200 will receive this message and retransmit it to the wireless alerter 100. The host device 200 contains two sets of antennas: one to communicate with the wireless network 400. the other to communicate with the wireless alerter 100.

Communication between the host device 200 and the wireless network 400 occurs through a wireless wide-area communication protocol including, but not limited to such protocols as cellular voice (GSM, CDMA. TDMA, iDEN), paging (FLEX, REFLEX) and / or dedicated data networks such as Mobitex^{™} and DataTAC^{™}.

The present embodiment illustrates an un-tethered mode where the host device 200 will send the notification message wirelessly to the wireless alerter using short-range wireless communication protocols. Short-range communication protocols include infrared, Bluetooth^{™}, IEEE 802.11 (WiFi) or RFID. In a tethered mode, wireless communication will not be necessary; communication will be conduction through the connection interfaces (110 and 204).

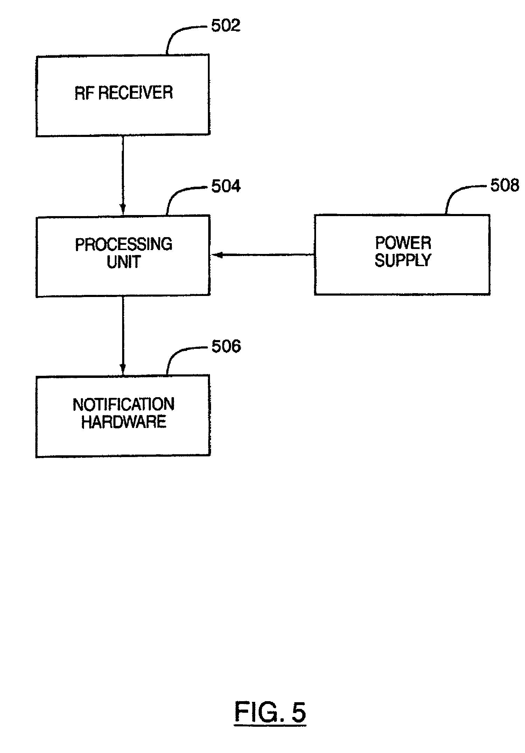

FIG. 5 is a block diagram illustrating the internal components of the portable alerter. Key components include the RF receiver 502, the processing unit 504, the power supply 508 and the notification hardware 506. The power supply 508 is usually a battery, usually an alkaline or rechargeable battery. The processing unit 504 contains a microprocessor and is responsible for processing incoming alerter signals and outputting result to the notification hardware 506. The notification hardware 506 consists of either a light 104, a speaker 106 and/or a vibrator 112.

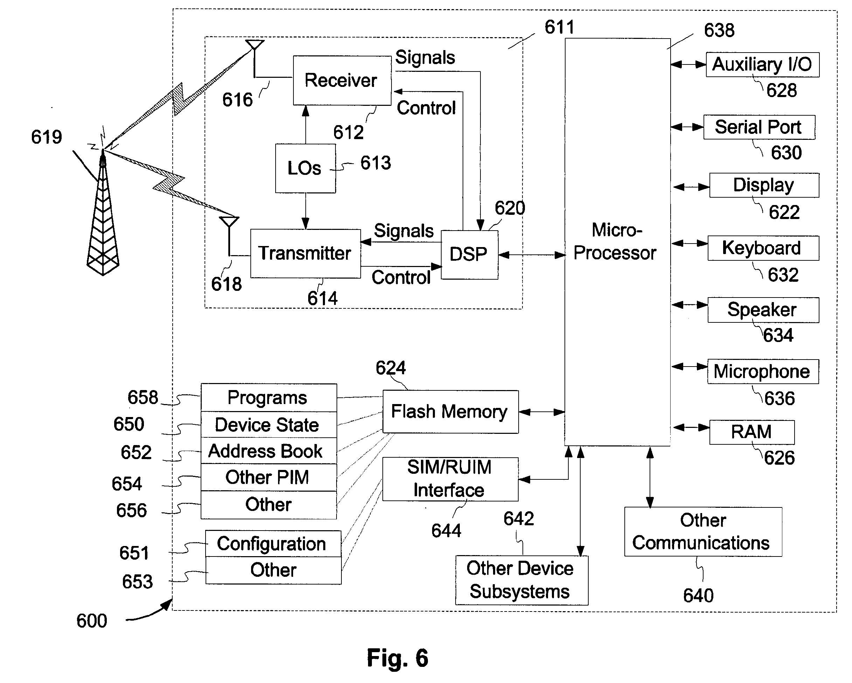

FIG. 6 is a block diagram illustrating the subsystems of interest in a mobile communication device. Mobile communication device 600 is preferably a two-way wireless electronic communication device having at least voice and data communication capabilities. Mobile electronic device 600 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile communication device 600 is enabled for two-way communication, it incorporates a communication antenna subsystem 611, including both a receiver 612 and a transmitter 614, as well as associated components such as one or more, preferably embedded or internal, antenna elements 616 and 618, local oscillators (LOs) 613, and a processing module such as a digital signal processor (DSP) 620. As will be apparent to those skilled in the field of communications, the particular design of the communication subsystem 611 is dependent upon the communication network in which the device is intended to operate.

Mobile electronic device 600 preferably includes a microprocessor 638 that controls the overall operation of the device. Communication functions, including at least data and voice communications, are performed through communication subsystem 611. Microprocessor 638 also interacts with further device subsystems such as the display 622, flash memory 624, random access memory (RAM) 626, auxiliary input/output (1/0) subsystems 628, serial port 630, keyboard 632, speaker 634, microphone 636, a short-range communications subsystem 640 and any other device subsystems generally designated as 642.

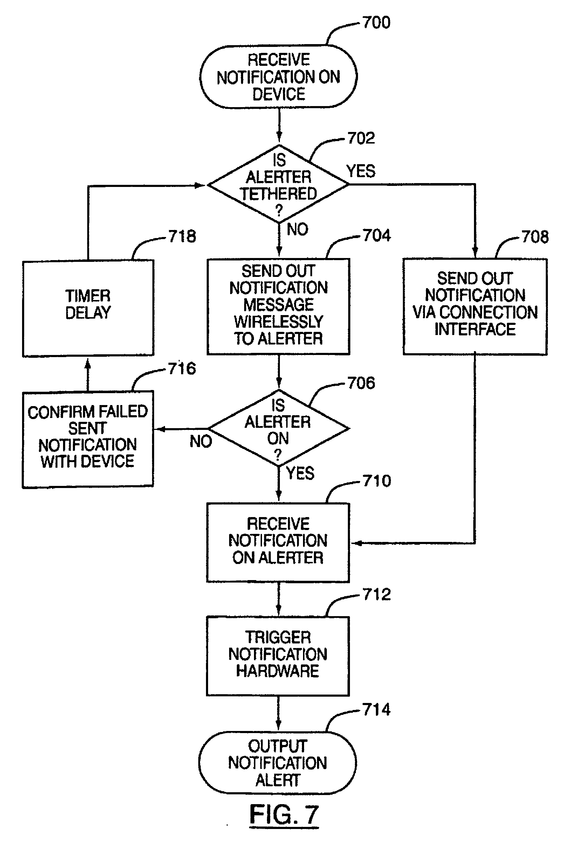

FIG. 7 is a flow chart illustrating a process of receiving notification on the mobile alerter. The process begins with a reception of a notification message on the host device at step 700. The host device 200 will then determine whether the wireless alerter 100 is tethered at step 702.

If the wireless alerter 100 is tethered, a notification message will be sent to the alerter across the connection interface at step 708. The alerter will receive the notification at step 710 and then trigger to output this notification using the requested notification hardware at step 712. The final result is a notification alert is outputted (step 714)

However, if the wireless alerter is un-tethered (i.e., alerter is not available) at step 702, the host device 200 will send out a notification message wirelessly to the alerter at step 704. The system will then determine whether the alerter is on (step 706). If it is on, the alerter will receive the notification on the alerter (step 710), trigger the output notification hardware (step 712) and output the notification alert (step 714).

If the alerter is not on (step 706), the host device will be notified of the failed communication attempt. It will then confirm the failed notification attempt at step 716 and create a timer delay sequence at step 718 where it will loop back to step 702 to determine whether the alerter is tethered and re-send the notification message to the alerter (step 704). This looping process will continue until a notification message is sent to the alerter. The timer delay at step 718 is user-configurable and can range from a small interval (e.g., once every second) to a large interval (e.g., once every 15 minutes).

Certain embodiments of this invention may have the host device use its default notification system (i.e., built-in notification system of host device not connected to the wireless alerter) to notify the user if a failed connection is detected at the host device.

The invention addresses the need of un-obtrusive, wearable notification without carrying a larger and often bulkier host device. The alerter offers the advantages of greater control, convenience, and manageability of incoming alerts. Users may use the host device to reply to the alerter notification of importance or may chose to ignore the alert to respond at a more convenient time. In addition, host device security is heightened if the host device need not be displayed.

The un-obtrusive and wearable characteristics of the alerter enable the alerter to be worn out of sight and concealed from view (e.g., attached to undergarments). Furthermore, the wearable nature of the invention enables the invention to be worn as a fashion accessory to complement one's garment.

Both the tethered and un-tethered removable alerter invention permits the option of customizing different alerts. It is preferable that software filters be used to configure different alerts for different individuals. For example, the alerter can be configured for ring tone 1 from sender A and ring tone 2 from sender B.

The following invention is not exclusive to communicating with one host device. It is preferable that the alerter be extended to support multiple host devices, where the host device may be the same or different types of devices. Examples of other host devices include cellular, wireless organizers, and/or wirelessly enabled notebook computers.

One extension of this invention may include adding software filters to customize different alerts for different individuals. A further extension may be to enable the wireless alerter to communicate with multiple host devices.

The above-described embodiments of the present application are intended to be examples only. Those of skill in the art may effect alterations, modifications and variations to the particular embodiments without departing from the scope of the application, as defined in the appended claims.

## Claims

1. A mobile alerter (100) for a host mobile communications device (200, 600), said mobile alerter comprising: a processor (504); a power supply (508); notification hardware (506); and a wireless receiver (502) for communicating over a wireless interface with the mobile device (200, 600) to receive a notification message from said mobile device to trigger the notification hardware (506) to issue a notification alert to a user, the mobile alerter (100) thereby forming a notification unit (100) of said mobile device when in an un-tethered mode of operation;
wherein:
the mobile alerter (100) has a connection interface (110) for removably connecting it to said mobile device (200, 600) said mobile alerter (100)being arranged to receive a notification message from the mobile device (200, 600) over said connection interface (110) when connected thereto for triggering the notification hardware (506), the mobile alerter (100) thereby forming a notification unit of said mobile device (200, 600) when in a tethered mode of operation.

2. A mobile alerter as claimed in claim 1, wherein the notification hardware (506) comprises any one or a combination of a speaker (106), a vibrator (112) or a light (104).

3. A mobile alerter as claimed in claim 1 or claim 2, wherein the power supply comprises a battery (108).

4. A mobile communications device including the mobile alerter (100) of any of claims 1 to 3.

5. A communications device as claimed in claim 4, comprising at least one form of communication means from the group consisting of a voice communication means and a data communication means.

6. A communications device as claimed in claim 4 or claim 5, wherein a connection interface (204) of the mobile device which matingly engages the connection interface (110) of the alerter (100) is located in a cavity (202) of the mobile device (200, 600) said cavity being adapted to slidably receive the alerter (100).

7. A communications device as claimed in claim 6, wherein the connection interfaces (110, 204) of the alerter (100) and mobile device (200, 600) between them comprise any of a serial interface, a USB or a parallel interface.

8. A communications device as claimed in any of claims 4 to 7, wherein the mobile device (200, 600) has a built-in default alert notification system not connected to the alerter (100), said default alert notification system being provided to notify the user of a failed notification alert communication attempt from the mobile device (200, 600) to the alerter (100).

9. A method for issuing a notification alert to a user of a host mobile communications device (200, 600) comprising the steps of: receiving a first notification alert on the mobile device (200, 600) from a wireless network (400) sending a second notification alert from the mobile device to a mobile alerter (100); receiving said second notification alert at said mobile alerter (100), wherein said second notification alert triggers notification hardware (506) of said alerter (100) to issue an alert to a user; wherein the mobile device (200, 600) sends the second notification alert to the mobile alerter (100) over a wireless interface when said alerter (100) is in an un-tethered mode of operation, wherein the mobile device (200, 600) sends the second notification alert to the mobile alerter (100) when the mobile alerter is in a tethered mode of operation being removably connected to the mobile device (200, 600) by means of a connection interface (110, 204), said second notification alert being received by the mobile alerter (100) over the connection interface (110, 204).

10. A method as claimed in claim 9, wherein it comprises the step of determining at the mobile device (200, 600) whether the alerter (100) is in a tethered or un-tethered mode of operation upon receipt at said mobile device of the first notification alert from the wireless network (400).

11. A method as claimed in claim 9 or claim 10, wherein it comprises issuing an alert to the user of a failed notification alert communication attempt from the mobile device (200, 600) to the alerter (100) through a built-in default alert notification system of the mobile device (200, 600), said system not connected to the alerter (100) and being provided to notify the user of said failed communication attempt.

## Patentansprüche

1. Ein mobiler Benachrichtiger (100) für ein mobiles Host-Kommunikationsgerät (200, 600), der mobile Benachrichtiger umfassend:
einen Prozessor (504), eine Stromversorgung (508), Benachrichtigungshardware (506) und einen Drahtlosempfänger (502) zur Kommunikation über eine Drahtlosschnittstelle mit dem mobilen Gerät (200, 600), um eine Benachrichtigungsmeldung von dem mobilen Gerät zu empfangen, damit die Benachrichtigungshardware (506) so getriggert wird, dass sie einen Benachrichtigungsalarm an einen Benutzer ausgibt, wodurch der mobile Benachrichtiger (100) eine Benachrichtigungseinheit (100) des mobilen Geräts bildet, wenn er sich in einem unangebundenen Betriebsmodus befindet,
wobei:
der mobile Benachrichtiger (100) über eine Verbindungsschnittstelle (110) verfügt, um ihn abnehmbar mit dem mobilen Gerät (200, 600) zu verbinden, der mobile Benachrichtiger (100) so angeordnet ist, dass er eine Benachrichtigungsmeldung von dem mobilen Gerät (200, 600) über die Verbindungsschnittstelle (110) empfängt, wenn er damit verbunden ist, um die Benachrichtigungshardware (506) zu triggern, wodurch der mobile Benachrichtiger (100) eine Benachrichtigungseinheit des mobilen Geräts (200, 600) bildet, wenn er sich in einem angebundenen Betriebsmodus befindet.

2. Ein mobiler Benachrichtiger gemäß Anspruch 1, wobei die Benachrichtigungshardware (506) eine beliebige Komponente oder eine Kombination aus den folgenden Komponenten umfasst: ein Lautsprecher (106), ein Vibrator (112) oder ein Licht (104).

3. Ein mobiler Benachrichtiger gemäß Anspruch 1 und Anspruch 2, wobei die Stromversorgung eine Batterie (108) umfasst.

4. Ein mobiles Kommunikationsgerät, welches den mobilen Benachrichtiger (100) gemäß jedem der Ansprüche 1 bis 3 einschließt.

5. Ein Kommunikationsgerät gemäß Anspruch 4, das mindestens eine Form von Kommunikationsmitteln aus der Gruppe umfasst, die aus einem Sprachkommunikationsmittel und einem Datenkommunikationsmittel besteht.

6. Ein Kommunikationsgerät gemäß Anspruch 4 oder Anspruch 5, wobei eine Verbindungsschnittstelle (204) des mobilen Geräts, die passend in die Verbindungsschnittstelle (110) des Benachrichtigers (100) eingreift, in einem Hohlraum (202) des mobilen Geräts (200, 600) untergebracht ist,
wobei der Hohlraum so angepasst ist, dass er den Benachrichtiger (100) auf schiebende Weise aufnimmt.

7. Ein Kommunikationsgerät gemäß Anspruch 6, wobei die Verbindungsschnittstellen (110, 204) des Benachrichtigers (100) und des mobile Geräts (200, 600) untereinander durch eine serielle Schnittstelle, eine USB-Schnittstelle oder eine parallele Schnittstelle gebildet werden.

8. Ein Kommunikationsgerät gemäß jedem der Ansprüche 4 bis 7, wobei das mobile Gerät (200, 600) ein eingebautes Standard-Alarmbenachrichtigungssystem hat, das nicht mit dem Benachrichtiger (100) verbunden ist, wobei dieses Standard-Alarmbenachrichtigungssystem bereitgestellt wird, um den Benutzer von einem fehlgeschlagenen Benachrichtigungsalarm-Kommunikationsversuch vom mobilen Gerät (200, 600) zum Benachrichtiger (100) zu benachrichtigen.

9. Ein Verfahren zum Ausgeben eines Benachrichtigungsalarms an einen Benutzer eines mobilen Host-Kommunikationsgeräts (200, 600), das die folgenden Schritte umfasst: Empfangen eines ersten Benachrichtigungsalarms auf dem mobilen Gerät (200, 600) von einem Drahtlosnetzwerk (400); Senden eines zweiten Benachrichtigungsalarms vom mobilen Gerät zu einem mobilen Benachrichtiger (100); Empfangen des zweiten Benachrichtigungsalarms am mobilen Benachrichtiger (100),
wobei der zweite Benachrichtigungsalarm die Benachrichtigungshardware (506) des Benachrichtigers (100) so triggert, dass sie einen Alarm an einen Benutzer ausgibt; wobei das mobile Gerät (200, 600) den zweiten Benachrichtigungsalarm an den mobilen Benachrichtiger (100) über eine Drahtlosschnittstelle sendet, wenn der Benachrichtiger (100) sich in einem unangebundenen Betriebsmodus befindet, wobei das mobile Gerät (200, 600) den zweiten Benachrichtigungsalarm an den mobilen Benachrichtiger (100) sendet, wenn der mobile Benachrichtiger sich in einem angebundenen Betriebsmodus befindet, in dem er mithilfe einer Verbindungsschnittstelle (110, 204) abnehmbar mit dem mobilen Gerät (200, 600) verbunden ist, wobei der zweite Benachrichtigungsalarm durch den mobilen Benachrichtiger (100) über die Verbindungsschnittstelle (110, 204) empfangen wird.

10. Ein Verfahren gemäß Anspruch 9, wobei es den Schritt des Ermittelns am mobilen Gerät (200, 600) umfasst, ob der Benachrichtiger (100) sich in einem unangebundenen oder in einem angebundenen Betriebsmodus befindet, wenn am mobilen Gerät der erste Benachrichtigungsalarm vom Drahtlosnetzwerk (400) empfangen wird.

11. Ein Verfahren gemäß Anspruch 9 oder Anspruch 10, wobei es das Ausgeben eines Alarms an den Benutzer bei einem fehlgeschlagenen Benachrichtigungsalarm-Kommunikationsversuch vom mobilen Gerät (200, 600) zum Benachrichtiger (100) über ein eingebautes Standard-Alarmbenachrichtigungssystem des mobilen Geräts (200, 600) umfasst,
wobei das System nicht mit dem Benachrichtiger (100) verbunden ist und bereitgestellt ist, um den Benutzer von dem fehlgeschlagenen Kommunikationsversuch zu benachrichtigen.

## Revendications

1. Alerteur mobile (100) destiné à un dispositif de communication mobile hôte (200, 600), ledit alerteur mobile comprenant : un processeur (504) ; un dispositif d'alimentation en énergie (508) ; un dispositif de notification (506) ; et un récepteur sans fil (502) permettant de communiquer sur une interface sans fil avec le dispositif mobile (200, 600) pour recevoir un message de notification provenant dudit dispositif mobile afin de faire produire par le dispositif de notification (506) une alerte de notification destinée à un utilisateur, l'alerteur mobile (100) formant ainsi une unité de notification (100) dudit dispositif mobile lorsqu'il est dans un mode de fonctionnement non captif ;
dans lequel
l'alerteur mobile (100) comporte une interface de connexion (110) permettant de le connecter de manière amovible audit dispositif mobile (200, 600), ledit alerteur mobile (100) étant agencé pour recevoir un message de notification du dispositif mobile (200, 600) sur ladite interface de connexion (110) lorsqu'il est connecté à celle-ci pour déclencher le dispositif de notification (506), l'alerteur mobile (100) formant ainsi une unité de notification dudit dispositif mobile (200, 600) lorsqu'il est dans un mode de fonctionnement captif.

2. Alerteur mobile selon la revendication 1, dans lequel le dispositif de notification (506) comprend un élément quelconque parmi un haut-parleur (106), un vibreur (112) ou une lumière (104) ou une combinaison de ces éléments.

3. Alerteur mobile selon la revendication 1 ou la revendication 2, dans lequel le dispositif d'alimentation en énergie comprend une batterie (108).

4. Dispositif de communication mobile comprenant l'alerteur mobile (100) selon l'une quelconque des revendications 1 à 3.

5. Dispositif de communication selon la revendication 4, comprenant au moins une forme de moyen de communication dans le groupe constitué d'un moyen de communication vocale et d'un moyen de communication de données.

6. Dispositif de communication selon la revendication 4 ou la revendication 5,
dans lequel une interface de connexion (204) du dispositif mobile qui vient en prise de manière correspondante avec l'interface de connexion (110) de l'alerteur (100) est située dans une cavité (202) du dispositif mobile (200, 600), ladite cavité étant conçue pour recevoir l'alerteur (100) de manière coulissante.

7. Dispositif de communication selon la revendication 6, dans lequel les interfaces de connexion (110, 204) de l'alerteur (100) et du dispositif mobile (200, 600) comprennent entre elles une interface quelconque parmi une interface série, une interface USB ou une interface parallèle.

8. Dispositif de communication selon l'une quelconque des revendications 4 à 7, dans lequel le dispositif mobile (200, 600) comporte un système de notification d'alerte par défaut intégré non connecté à l'alerteur (100), ledit système de notification d'alerte par défaut étant prévu pour notifier à l'utilisateur l'échec d'une tentative de communication d'alerte de notification du dispositif mobile (200, 600) à l'alerteur (100).

9. Procédé d'envoi d'une alerte de notification à un utilisateur d'un dispositif de communication mobile hôte (200, 600), comprenant les étapes consistant à : recevoir une première alerte de notification sur le dispositif mobile (200, 600) provenant d'un réseau sans fil (400) ; envoyer une deuxième alerte de notification du dispositif mobile à un alerteur mobile (100) ; recevoir ladite deuxième alerte de notification au niveau dudit alerteur mobile (100), dans lequel ladite deuxième alerte de notification déclenche un dispositif de notification (506) dudit alerteur (100) de manière à ce qu'il envoie une alerte vers un utilisateur ; dans lequel le dispositif mobile (200, 600) envoie la deuxième alerte de notification à l'alerteur mobile (100) sur une interface sans fil lorsque ledit alerteur (100) est dans un mode de fonctionnement non captif, dans lequel le dispositif mobile (200, 600) envoie la deuxième alerte de notification à l'alerteur mobile (100) lorsque l'alerteur mobile est dans un mode de fonctionnement captif étant connecté de manière amovible au dispositif mobile (200, 600) par le biais d'une interface de connexion (110, 204), ladite deuxième alerte de notification étant reçue par l'alerteur mobile (100) sur l'interface de connexion (110, 204).

10. Procédé selon la revendication 9, comprenant l'étape consistant à déterminer, au niveau du dispositif mobile (200, 600) si l'alerteur (100) est dans un mode de fonctionnement captif ou non captif lors de la réception, au niveau dudit dispositif mobile, de la première alerte de notification provenant du réseau sans fil (400).

11. Procédé selon la revendication 9 ou la revendication 10, comprenant l'étape consistant à envoyer une alerte à l'utilisateur concernant l'échec d'une tentative de communication d'alerte de notification du dispositif mobile (200, 600) à l'alerteur (100) par l'intermédiaire d'un système de notification d'alerte par défaut intégré du dispositif mobile (200, 600), ledit système n'étant pas connecté à l'alerteur (100) et étant prévu pour notifier à l'utilisateur ledit échec de tentative de communication.
